# EUROPÄISCHE PATENTSCHRIFT

(11) **EP 3 756 171 B1**
(45) Veröffentlichungstag und Bekanntmachung des Hinweises auf die Patenterteilung: **01.04.2026**
(21) Anmeldenummer: 19705475.2
(22) Anmeldetag: 11.02.2019
(51) Int. Cl.: H04N 21/44, H04N 21/845, H04N 23/00, H04N 9/82, G07C 5/08

(54) **SYSTEM UND VERFAHREN ZUR AUTOMATISCHEN ERSTELLUNG EINES VIDEOS EINER FAHRT**
SYSTEM AND METHOD FOR AUTOMATICALLY CREATING A VIDEO OF A JOURNEY
SYSTÈME ET PROCÉDÉ DE CRÉATION AUTOMATIQUE D'UNE VIDÉO D'UN TRAJET

(30) Priorität: 20.02.2018 DE 102018202514
(43) Veröffentlichungstag der Anmeldung: 30.12.2020
(73) Patentinhaber: Bayerische Motoren Werke Aktiengesellschaft, 80809 München (DE)
(72) Erfinder: GÖTZ, Philipp, 85238 Petershausen (DE)
(86) Internationale Anmeldenummer: PCT/EP2019/053314
(87) Internationale Veröffentlichungsnummer: WO 2019/162128

(56) Entgegenhaltungen:
- US-A1- 2011 304 447
- US-A1- 2016 371 553

## Beschreibung

Die vorliegende Erfindung betrifft ein System und ein Verfahren zur automatischen Erstellung eines aussagekräftigen Videos einer Fahrzeugfahrt.

Moderne Fahrzeuge umfassen eine Vielzahl von Sensoren, die beispielsweise bei der Bereitstellung von Fahrerassistenzsystemen eine Rolle spielen. Fahrerassistenzsysteme sind Systeme, die teilautonom oder autonom in den Antrieb, die Steuerung und/oder Signalisierungseinrichtungen des Fahrzeugs eingreifen. Die Sensoren können beispielsweise Videokameras, Lidar-Sensoren, Radar-Sensoren, etc. umfassen. Die durch die Sensoren erfassten Messgrößen werden Verarbeitet und für den Einsatz der Fahrerassistenzsysteme verwertet.

Druckschrift US 2016/0371553 A1 offenbart ein System und Verfahren zum Überwachen einer Fahrzeugflotte und zum Analysieren eines mit der Fahrzeugflotte verbundenen Fahrers. Das System umfasst eine Überwachungseinheit zum Empfangen von Informationen von einer Fahrzeugverfolgungsvorrichtung, die einem Fahrzeug der Flotte zugeordnet ist. Eine Mapping-Einheit zeigt einer zentralen Überwachungsperson einen Vorfall auf einer Karte an. Eine Video-Speichereinheit empfängt Videodaten von einer dem Fahrzeug zugeordneten Videokamera und ordnet dem Symbol ein durch die zugeordnete Videokamera aufgenommenes Vorfallvideo zu. Somit kann dieses Video in einer zentralen Einheit gespeichert und zu einem späteren Zeitpunkt angesehen werden.

Druckschrift US 2011/0304447 A1 offenbart ein System und Verfahren umfassend einen Fahr-Recorder in einem Fahrzeug. Im Falle eines detektierten Vorfalls - beispielsweise eines Unfalls des Fahrzeugs - kann ein durch den Fahr-Recorder aufgenommenes Video an eine zentrale Recheneinheit zur späteren Ansicht übermittelt und gespeichert werden.

In manchen Fahrsituationen, wie beispielsweise bei Fahrten auf Rennstrecken und/oder bei Fahrertrainings, kann ein Fahrer eines Fahrzeugs ein Interesse an aussagekräftigen Aufnahmen von der eigenen Fahrt haben.

Die Aufgabe der Erfindung besteht darin, im Fahrzeug vorhandene Sensoren zu nutzen, um automatisch ein aussagekräftiges Video einer Fahrt zu erstellen.

Diese Aufgabe wird erfindungsgemäß durch die Merkmale der unabhängigen Ansprüche gelöst. Bevorzugte Ausführungsformen sind Gegenstand der abhängigen Ansprüche.

Die vorstehend genannte Aufgabe wird durch ein System zur automatischen Erstellung eines Videos einer Fahrt gelöst, umfassend:
eine Recheneinheit;
ein Fahrzeug, wobei das Fahrzeug umfasst:
   - zumindest einen Sensor, der eingerichtet ist, kontinuierlich technische Fahrparameter des Fahrzeugs zu erfassen;
   - zumindest eine Videokamera, die eingerichtet ist, kontinuierlich Videosequenzen einer vordefinierbaren Länge aufzunehmen;
   wobei die Recheneinheit eingerichtet ist:
   - jede der Videosequenzen mit Bezug auf die erfassten technischen Fahrparameter zu verarbeiten;
   - jede der verarbeiteten Videosequenzen anhand vordefinierbarer Kriterien zu markieren; und
   - automatisch ein Video umfassend eine vordefinierbare Anzahl geeignet markierter Videosequenzen zu erstellen..

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Das System umfasst zumindest eine Recheneinheit. Das System umfasst zumindest ein Fahrzeug. Jedes Fahrzeug umfasst zumindest einen Sensor. Der Sensor ist eingerichtet, kontinuierlich technische Fahrparameter des Fahrzeugs zu erfassen. Kontinuierlich umfasst dabei beispielsweise in regelmäßigen zeitlichen Abständen und/oder zu vordefinierten Ereignissen. Jedes Fahrzeug umfasst zumindest eine Videokamera, die eingerichtet ist, kontinuierlich Videosequenzen einer vordefinierbaren Länge aufzunehmen.

Die Videokamera, zumindest ein Sensor und/oder die Recheneinheit können fest im Fahrzeug integriert sein. Die zumindest eine Videokamera kann derart im Fahrzeug angebracht sein, dass sie Videosequenzen vom Fahrer des Fahrzeugs aufnehmen kann. Darüber hinaus oder alternativ dazu kann die zumindest eine Videokamera derart im Fahrzeug angebracht sein, dass sie Videosequenzen von der Fahrzeugumgebung aufnehmen kann.

Darüber hinaus oder alternativ dazu können die Videokamera, zumindest ein Sensor und/oder die Recheneinheit über ein mobiles Endgerät ins Fahrzeug integriert sein. Bei einem mobilen Endgerät handelt es sich um ein Gerät, das in der Lage ist, in einem mobilen Netzwerk über lokale Netzwerke bzw. Local Area Networks (LANs), wie z.B. Wireless Fidelity (WiFi), oder über Weitverkehrsnetze bzw. Wide Area Networks (WANs) wie z.B. Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), oder World Wide Interoperability for Microwave Access (WIMAX) drahtlos zu kommunizieren. Eine Kommunikation über weitere gängige oder künftige Kommunikationstechnologien ist möglich. Der Begriff mobiles Endgerät beinhaltet insbesondere Smartphones, aber auch andere mobile Telefone bzw. Handys, Personal Digital Assistants (PDAs), Tablet PCs sowie alle gängigen sowie künftigen elektronischen Geräte, welche mit einer Technologie zum Laden und Ausführen von Apps ausgestattet sind.

In diesem Beispiel kann ein mobiles Endgerät derart im Fahrzeug platziert sein, dass die Front- und/oder Rückkamera des Fahrzeugs Videosequenzen vom Fahrzeuginnenraum bzw. Fahrer und/oder von der Fahrzeugumgebung aufnehmen kann bzw. können. Beispielsweise kann das mobile Endgerät derart im Fahrzeug angebracht werden, dass die Frontkamera des mobilen Endgeräts Videosequenzen des Fahrers des Fahrzeugs aufnehmen kann, wohingegen die Rückkamera des mobilen Endgeräts Videosequenzen der Fahrzeugumgebung aufnehmen kann. Das mobile Endgerät kann drahtgebunden und/oder drahtlos mit dem Fahrzeug verbunden sein.

Die Recheneinheit kann die Recheneinheit des mobilen Endgeräts umfassen. Die technischen Fahrparameter können zumindest von einem Sensor des mobilen Endgeräts erfasst werden. Darüber hinaus oder alternativ dazu können die technischen Fahrparameter von zumindest einem Sensor des Fahrzeugs erfasst werden. Die Sensordaten können vom Fahrzeug an das mobile Endgerät drahtgebunden und/oder drahtlos übertragen werden.

Darüber hinaus oder alternativ dazu kann sich die Recheneinheit im Fahrzeug befinden. In diesem Beispiel können die Sensordaten und/oder die Videosequenzen vom mobilen Endgerät drahtgebunden oder drahtlos an die Recheneinheit des Fahrzeugs übertragen werden.

Darüber hinaus oder alternativ dazu kann ein Backend-Server die Recheneinheit umfassen. In diesem Fall können die technischen Fahrparameter und die Videosequenzen vom Fahrzeug und/oder vom mobilen Endgerät an den Backend-Server übermittelt werden. In diesem Beispiel kann das Fahrzeug ein Kommunikationsmodul umfassen. Das Kommunikationsmodul ist in der Lage, eine Kommunikationsverbindung mit anderen Kommunikationsteilnehmern, z.B. anderen Fahrzeugen, dem Backend-Server, mobilen Endgeräten etc., aufzubauen, um Daten zu übertragen. Das Kommunikationsmodul kann ein Teilnehmeridentitätsmodul bzw. ein Subscriber Identity Module bzw. eine SIM-Karte (nicht gezeigt) umfassen, welche(s) dazu dient, eine Kommunikationsverbindung über ein Mobilfunksystem aufzubauen. Das Teilnehmeridentitätsmodul identifiziert dabei das Kommunikationsmodul eindeutig im Mobilfunknetz. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln. Auch eine drahtlose Kommunikationsverbindung über weitere gängige und künftige Technologien, z.B. lokale Netzwerke bzw. Local Area Networks (LANs) wie z.B. Wireless LANs etc. kann über das Kommunikationsmodul mit anderen Kommunikationsteilnehmern aufgebaut werden.

Die Recheneinheit ist eingerichtet, jede der Videosequenzen mit Bezug auf die erfassten technischen Fahrparameter zu verarbeiten.

Darüber hinaus ist die Recheneinheit eingerichtet, jede der verarbeiteten Videosequenzen anhand vordefinierbarer Kriterien zu markieren.

Die Recheneinheit ist eingerichtet, automatisch ein Video umfassend eine vordefinierbare Anzahl geeignet markierter Videosequenzen zu erstellen.

Vorteilhafter Weise kann somit automatisch ein Video einer Fahrt eines Fahrzeugs erstellt werden, das Videosequenzen mit Bezug auf technische Fahrparameter sowie geeigneter Markierung enthält.

Vorzugsweise umfasst der zumindest eine Sensor:
- einen Beschleunigungssensor; und/oder
   - einen Gyrosensor; und/oder
   - ein oder mehrere Sensoren einer Fahrdynamikregelung.

Ein Beschleunigungssensor bzw. Accelerometer ist ein Sensor, der eine Beschleunigung durch die Messung einer auf eine Masse oder Test-Masse wirkende Trägheitskraft bestimmt. Beispielsweise kann der Beschleunigungssensor die Beschleunigung ermitteln sowie eine Geschwindigkeitszunahme oder -abnahme.

Ein Gyrosensor ist ein Beschleunigungssensor bzw. Lagesensor, der kleinste Beschleunigungen, Drehbewegungen und/oder Lageänderung einer Masse oder Test-Masse erfasst. Daten des Gyrosensors können mit Positionsdaten eines Positionsermittlungssensors kombiniert werden. Ein Positionsermittlungssensor ist ein Sensor, der mithilfe eines Navigationssatellitensystems aktuelle Positionsdaten ermitteln kann. Bei dem Navigationssatellitensystem kann es sich um jedes gängige sowie künftige globale Navigationssatellitensystem bzw. Global Navigation Satellite System (GNSS) zur Positionsbestimmung und Navigation durch den Empfang der Signale von Navigationssatelliten und/oder Pseudoliten handeln. Beispielsweise kann es sich dabei um das Global Positioning System (GPS), GLObal NAvigation Satellite System (GLONASS), Galileo, positioning system, und/oder BeiDou Navigation Satellite System, handeln. Im Falle von GPS ist der Positionsermittlungssensor ein GPS-Sensor. Durch die Kombination von Gyrosensor und Positionsermittlungssensor können Richtungsänderungen sehr genau bestimmt werden.

Eine Fahrdynamikregelung bzw. Electonic Stability Control (ESC) ist ein elektronisch gesteuertes Fahrerassistenzsystem für Fahrzeuge, das ein Schleudern des Fahrzeugs im Grenzbereich im Kurven beim Übersteuern bzw. beim Untersteuern verhindert. Dazu kann die ESC das Antiblockiersystem (ABS) mit einer elektronischen Bremskraftverteilung, einem Bremsassistenten und einer Antriebsschlupfregelung kombinieren.

Die ESC kann folgende Sensoren umfassen:
- Lenkwinkelsensor zur Erfassung des Lenkeinschlagwinkels; und/oder
- Drucksensoren zur Erfassung des Bremsdrucks; und/oder
- ABS-Radsensoren zur Erfassung der Raddrehzahlen; und/oder
- Drehratensensor zur Erfassung der Drehrate; und/oder
- Querbeschleunigungssensor zur Erfassung der Querbeschleunigung.

Ein elektronisches Steuergerät verarbeitet alle Signale der o.g. Sensoren und gibt entsprechende Ansteuerungssignale an geeignete Aktuatoren aus.

Die vorgenannten Sensoren erfassen somit technische Fahrparameter. Mit anderen Worten umfassen technische Fahrparameter ein oder mehrere der durch die vorgenannten Sensoren erfassten Daten.

Erfindungsgemäß umfasst das Verarbeiten jeder Videosequenz mit Bezug auf die erfassten technischen Fahrparameter das Erweitern der Metadaten der Videosequenz über die Zeitachse um zumindest einen von dem zumindest einen Sensor erfassten zumindest einen technischen Fahrparameter umfasst.

Jede Videosequenz umfasst eine Vielzahl von Metadaten. Die automatische Erfassung und Hinterlegung von Metadaten zu digitalen Foto- und Videodateien ist bekannt. Metadaten umfassen beispielsweise ein Aufzeichnungsdatum des jeweiligen Bildes entlang eines Zeitstrahls einer Videodatei. Darüber hinaus können Metadaten Informationen über eine Orientierung der Kamera, einer Auflösung, einer GPS-Position, sowie der verwendeten Kameraeinstellungen, etc. umfassen.

Das Verarbeiten jeder Videosequenz mit Bezug auf die erfassten technischen Fahrparameter umfasst das Erweitern der Metadaten über die Zeitachse um zumindest einen technischen Fahrparameter, der von dem zumindest einen Sensor erfasst wurde. Der Begriff "Über die Zeitachse" bedeutet insbesondere, dass die Metadaten jeweiligen Bilder einer Videosequenz zeitsynchron durch die jeweiligen technischen Fahrparameter erweitert werden.

Vorteilhafter Weise werden dadurch technische Fahrparameter mit jeweils automatisch aufgenommen Videosequenzen in Bezug gebracht.

Erfindungsgemäß umfasst das Verarbeiten jeder Videosequenz mit Bezug auf die erfassten technischen Fahrparameter das Bewerten der Videosequenz entlang der Zeitachse unter Berücksichtigung des zumindest einen technischen Fahrparameters.

Das Verarbeiten jeder Videosequenz umfasst das Bewerten der Videosequenz entlang der Zeitachse unter Berücksichtigung des zumindest einen technischen Fahrparameters. Der Begriff "entlang der Zeitachse" bedeutet insbesondere, dass für jede Bildaufnahme jeder Videosequenz entlang deren Zeitachse eine Bewertung stattfindet, die auch als Metadatum hinterlegt wird.

Die Bewertung der jeweiligen Videosequenz entlang der Zeitachse kann dabei gemäß zumindest einer Bewertungsskala erfolgen.

Beispielsweise kann für jeden Sensor eine Bewertungsskala vordefiniert werden. Die Bewertungsskala kann geeignete Skalenwerte umfassen und Beispielsweise eine Skaleneinteilung von 0-5; 0-10; 0-100; etc. umfassen. Die Bewertungsskala ist für jeden Sensor geeignet auszuwählen, um die technischen Fahrparameter, die vom jeweiligen Sensor erfasst werden, geeignet auswertbar darzustellen.

Beispielsweise kann für den Beschleunigungssensor eine Bewertungsskala von 0-10 gewählt werden, wobei 0 für "keine Beschleunigung" steht und wobei 10 "für maximale Beschleunigung" steht.

Analog dazu kann eine geeignete Bewertungsskala für jeden weiteren Sensor gewählt werden.

Für jeden technischen Parameter kann dabei automatisch eine eigene Bewertung entsprechend der zugeordneten Bewertungsskala erfolgen.

Vorteilhafter Weise kann durch die Bewertung aller Videosequenzen entlang ihrer Zeitachse entsprechend den technischen Parametern jede Videosequenz automatisch anhand der technischen Parameter ausgewertet werden.

Vorzugsweise umfasst das Verarbeiten jeder Videosequenz mit Bezug auf die erfassten technischen Fahrparameter das Erstellen einer verkürzten Videosequenz einer vordefinierbaren Länge, wobei die verkürzte Videosequenz den Teil der Videosequenz mit der höchsten Bewertung entlang der Zeitachse umfasst.

Durch die Bewertung aller Videosequenzen entlang ihrer Zeitachse entsprechend den technischen Parametern kann jede Videosequenz automatisch verkürzt werden, wobei die verkürzte Videosequenz den Teil der Videosequenz mit der bzw. den höchsten Bewertungen entlang der Zeitachse umfasst. Die Erstellung der verkürzten Videosequenz kann mittels eines geeigneten Algorithmus erfolgen. Der Algorithmus kann aus den Bewertungen den Teil der Videosequenz auswählen, in dem die technischen Fahrparameter (kombiniert) am höchsten waren.

Vorteilhafter Weise wird somit der fahrtechnisch am höchsten bewertete und somit für den Fahrer des Fahrzeugs relevanteste Teil der Videosequenz als verkürzte Videosequenz gewählt.

Vorzugsweise umfasst das Markieren der verarbeiteten Videosequenzen:
- eine Gesamtbewertung der verarbeiteten Videosequenz gemäß vordefinierbarer Kriterien; und/oder
- eine Zuweisung eines Kontexts zur verarbeiteten Videosequenz.

Die verarbeiteten Videosequenzen können darüber hinaus oder alternativ dazu markiert werden. Das Markieren der verarbeiteten Videosequenzen umfasst eine Gesamtbewertung dieser gemäß vordefinierbarer Kriterien. Beispielsweise kann eine Gesamtbewertung der Bewertungen aller Videosequenzen (bzw. verkürzten Videosequenzen) entlang der Zeitachse unter Verwendung eines geeigneten Algorithmus erfolgen.

Vorteilhafter Weise ist dadurch eine automatische Kategorisierung jeder Videosequenz bzw. verkürzten Videosequenz entlang ihrer technischen Bedeutung mit Bezug auf die technischen Fahrparameter (z.B. maximale Beschleunigung, hoher Lastwechsel, Vollbremsung, etc. bzw. einer geeigneten Kategorisierung dieser) möglich.

Darüber hinaus oder alternativ dazu kann das Markieren der Videosequenzen die automatische Zuweisung eines Kontexts zu der Videosequenz bzw. verkürzten Videosequenz umfassen.

Beispielsweise kann für vordefinierte technische Fahrparameter eine Zuweisung eines Kontexts zur jeweiligen Videosequenz umfassen:

| **Technische Fahrparameter** | **Kontext** |
|---|---|
| leichte Beschleunigung und/oder keine Querbeschleunigung und/oder kein Bremsdruck , etc. | 1 (unspektakulär) |
| Mittlere Beschleunigung und/oder leichte Querbeschleunigung und/oder mittlerer Bremsdruck etc. | 2 (interessant) |
| Hohe Beschleunigung und/oder hoher Lenkeinschlagwinkel und/oder hoher Bremsdruck und/oder hohe Querbeschleunigung | 3 (spektakulär) |

Vorteilhafter Weise kann durch die Zuweisung des Kontexts eine automatische Selektion der verarbeiteten Videosequenzen für die Erstellung des Videos der Fahrt erfolgen.

Gemäß einem zweiten Aspekt wird die zugrundeliegende Aufgabe durch ein Verfahren zur automatischen Erstellung eines Videos einer Fahrt gelöst, umfassend:
kontinuierliches Erfassen, durch zumindest einen Sensor, technischer Fahrparameter eines Fahrzeugs;
kontinuierliches Aufnehmen, durch zumindest eine Videokamera, von Videosequenzen einer vordefinierbaren Länge;
Verarbeiten, durch eine Recheneinheit, jeder der aufgenommen Videosequenzen mit Bezug auf die erfassten technischen Fahrparameter;
Markieren, durch die Recheneinheit, jeder der verarbeiteten Videosequenzen anhand vordefinierbarer Kriterien; und
automatisches Erstellen, durch die Recheneinheit, eines Videos umfassend eine vordefinierbare Anzahl geeignet markierter Videosequenzen.

Vorzugsweise umfasst der zumindest eine Sensor:
- einen Beschleunigungssensor; und/oder
- einen Gyrosensor; und/oder
- ein oder mehrere Sensoren einer Fahrdynamikregelung.

Erfindungsgemäß umfasst das Verarbeiten jeder Videosequenz mit Bezug auf die erfassten technischen Fahrparameter das Erweitern der Metadaten der Videosequenz über die Zeitachse um zumindest einen von dem zumindest einen Sensor erfassten zumindest einen technischen Fahrparameter.

Erfindungsgemäß umfasst das Verarbeiten jeder Videosequenz das Bewerten der Videosequenz entlang der Zeitachse mit Bezug unter Berücksichtigung des zumindest einen technischen Fahrparameter entlang der Zeitachse des Videos;
wobei das Verarbeiten jeder Videosequenz das Erstellen einer verkürzten Videosequenz einer vordefinierbaren Länge umfasst, wobei die verkürzte Videosequenz den Teil der Videosequenz mit der höchsten Bewertung entlang der Zeitachse umfassen kann.

Erfindungsgemäß umfasst das Markieren der verarbeiteten Videosequenzen:
eine Gesamtbewertung der verarbeiteten Videosequenz gemäß vordefinierbarer Kriterien;

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein schematisches System zur automatischen Erstellung eines Videos einer Fahrt;
- **Fig. 2**: zeigt schematisch ein beispielhaftes automatisch erstelltes Video einer Fahrt, dass sich aus verschiedenen Videosequenzen zusammensetzt;
- **Fig. 3**: zeigt ein beispielhaftes zur automatischen Erstellung eines Videos einer Fahrt.

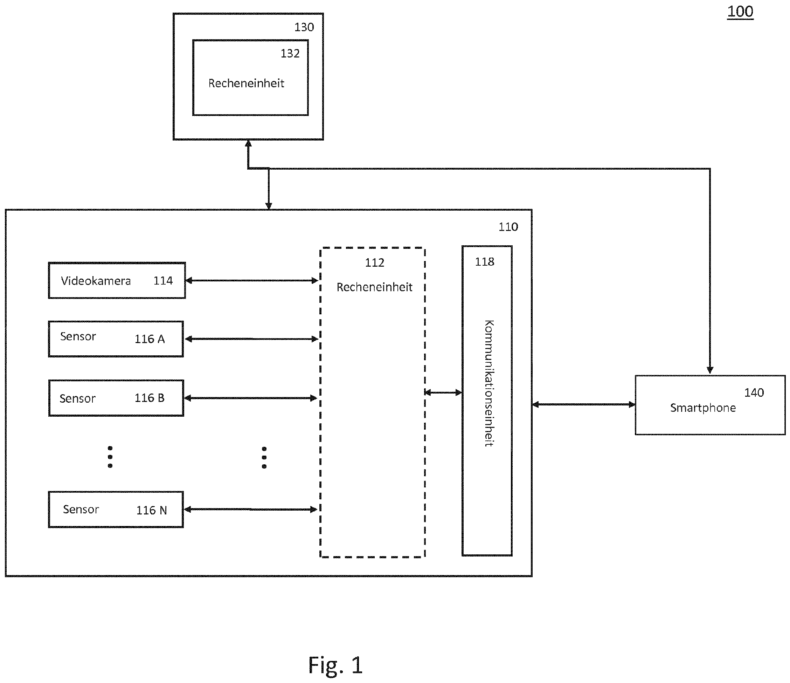

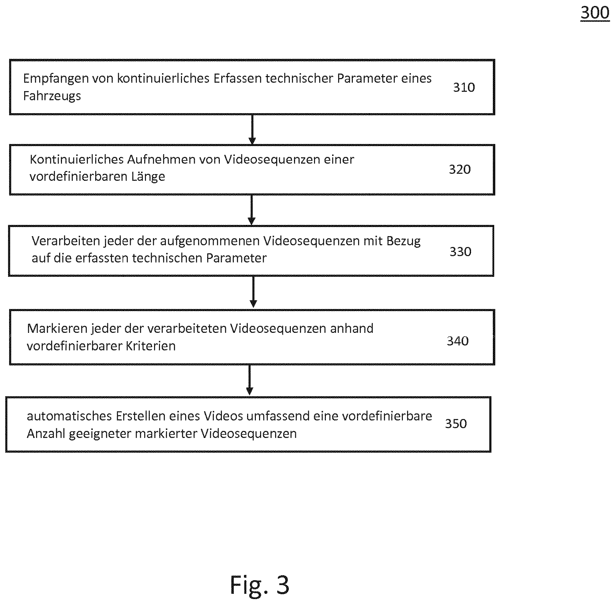

**Figur 1** zeigt schematisch ein beispielhaftes System 100 zur automatischen Erstellung eines Videos einer Fahrt. Auf dem System 100 kann das Verfahren wie mit Bezug auf Figur 3 beschrieben ausgeführt werden.

Das System 100 umfasst zumindest eine Recheneinheit 112, 132 und zumindest ein Fahrzeug 110. Der Begriff Fahrzeug 110 umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung. Das Fahrzeug 110 zumindest einen zumindest teilautonomen Fahrmodus umfassen.

Jedes Fahrzeug 110 zumindest einen Sensor 114A ... 114N. Der Sensor 114A ... 114N ist eingerichtet, kontinuierlich technische Fahrparameter des Fahrzeugs 110 zu erfassen. Kontinuierlich umfasst dabei beispielsweise in regelmäßigen zeitlichen Abständen und/oder zu vordefinierten Ereignissen. Jedes Fahrzeug 110 umfasst zumindest eine Videokamera 112, die eingerichtet ist, kontinuierlich Videosequenzen einer vordefinierbaren Länge aufzunehmen.

Der zumindest eine Sensor 114A ... 114N kann einen Beschleunigungssensor bzw. Accelerometer umfassen. Dieser bestimmt eine Beschleunigung durch die Messung einer auf eine Masse oder Test-Masse wirkende Trägheitskraft bestimmt. Beispielsweise kann der Beschleunigungssensor die Beschleunigung, eine Geschwindigkeitszunahme oder - abnahme etc. ermitteln.

Darüber hinaus oder alternativ dazu kann der zumindest eine Sensor 114A ... 114N einen Gyrosensor umfassen. Ein Gyrosensor ist ein Beschleunigungssensor bzw. Lagesensor, der kleinste Beschleunigungen, Drehbewegungen und/oder Lageänderung einer Masse oder Test-Masse erfasst. Daten des Gyrosensors können mit Positionsdaten eines Positionsermittlungssensors kombiniert werden. Ein Positionsermittlungssensor ist ein Sensor, der mithilfe eines Navigationssatellitensystems aktuelle Positionsdaten ermitteln kann. Bei dem Navigationssatellitensystem kann es sich um jedes gängige sowie künftige globale Navigationssatellitensystem bzw. Global Navigation Satellite System (GNSS) zur Positionsbestimmung und Navigation durch den Empfang der Signale von Navigationssatelliten und/oder Pseudoliten handeln. Beispielsweise kann es sich dabei um das Global Positioning System (GPS), GLObal NAvigation Satellite System (GLONASS), Galileo, positioning system, und/oder BeiDou Navigation Satellite System, handeln. Im Falle von GPS ist der Positionsermittlungssensor ein GPS-Sensor. Durch die Kombination von Gyrosensor und Positionsermittlungssensor können Richtungsänderungen sehr genau bestimmt werden.

Darüber hinaus oder alternativ dazu kann der zumindest eine Sensor 114 A ... 114N ein oder mehrere Sensoren einer Fahrdynamikregelung umfassen. Eine Fahrdynamikregelung bzw. Electonic Stability Control (ESC) ist ein elektronisch gesteuertes Fahrerassistenzsystem für Fahrzeuge, das ein Schleudern des Fahrzeugs im Grenzbereich im Kurven beim Übersteuern bzw. beim Untersteuern verhindert. Dazu kann die ESC das Antiblockiersystem (ABS) mit einer elektronischen Bremskraftverteilung, einem Bremsassistenten und einer Antriebsschlupfregelung kombinieren.

Die ESC kann folgende Sensoren umfassen:
- Lenkwinkelsensor zur Erfassung des Lenkeinschlagwinkels; und/oder
- Drucksensoren zur Erfassung des Bremsdrucks; und/oder
- ABS-Radsensoren zur Erfassung der Raddrehzahlen; und/oder
- Drehratensensor zur Erfassung der Drehrate; und/oder
- Querbeschleunigungssensor zur Erfassung der Querbeschleunigung.

Ein elektronisches Steuergerät erfasst die Signale der ESC-Sensoren und gibt entsprechende Ansteuerungssignale an geeignete Aktuatoren aus.

Die vorgenannten Sensoren erfassen somit technische Fahrparameter. Mit anderen Worten umfassen technische Fahrparameter ein oder mehrere der durch die vorgenannten Sensoren erfassten Daten bzw. Sensordaten.

Die Videokamera 112, der zumindest ein Sensor 114A ... 114N und/oder die Recheneinheit 112 können fest im Fahrzeug 110 integriert sein. Die zumindest eine Videokamera 112 kann derart im Fahrzeug 110 angebracht sein, dass sie Videosequenzen vom Fahrer des Fahrzeugs 110 aufnehmen kann. Darüber hinaus oder alternativ dazu kann die zumindest eine Videokamera 112 derart im Fahrzeug 110 angebracht sein, dass sie Videosequenzen von der Fahrzeugumgebung aufnehmen kann.

Darüber hinaus oder alternativ dazu können die Videokamera 112, zumindest ein Sensor 114A ... 114N und/oder die Recheneinheit 112 über ein mobiles Endgerät 140 ins Fahrzeug 110 integriert sein. Bei einem mobilen Endgerät 140 handelt es sich um ein Gerät, das in der Lage ist, in einem mobilen Netzwerk über lokale Netzwerke bzw. Local Area Networks (LANs), wie z.B. Wireless Fidelity (WiFi), oder über Weitverkehrsnetze bzw. Wide Area Networks (WANs) wie z.B. Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), oder World Wide Interoperability for Microwave Access (WIMAX) drahtlos zu kommunizieren. Eine Kommunikation über weitere gängige oder künftige Kommunikationstechnologien ist möglich. Der Begriff mobiles Endgerät beinhaltet insbesondere Smartphones, aber auch andere mobile Telefone bzw. Handys, Personal Digital Assistants (PDAs), Tablet PCs sowie alle gängigen sowie künftigen elektronischen Geräte, welche mit einer Technologie zum Laden und Ausführen von Apps ausgestattet sind.

In diesem Beispiel kann ein mobiles Endgerät 140 derart im Fahrzeug 110 angebracht sein, dass die Front- und/oder Rückkamera des mobilen Endgeräts 140 Videosequenzen vom Fahrzeuginnenraum bzw. Fahrer und/oder von der Fahrzeugumgebung aufnehmen kann bzw. können. Beispielsweise kann das mobile Endgerät 140 derart im Fahrzeug angebracht sein, dass die Frontkamera des mobilen Endgeräts 140 Videosequenzen des Fahrers des Fahrzeugs 110 aufnehmen kann, wohingegen die Rückkamera des mobilen Endgeräts 140 Videosequenzen der Fahrzeugumgebung aufnehmen kann. Das mobile Endgerät 140 kann drahtgebunden und/oder drahtlos mit dem Fahrzeug verbunden sein.

Die Recheneinheit 112 kann die Recheneinheit des mobilen Endgeräts 140 umfassen. Die technischen Fahrparameter können zumindest von einem Sensor 114A ... 114N des mobilen Endgeräts 140 erfasst werden. Darüber hinaus oder alternativ dazu können die technischen Fahrparameter von zumindest einem Sensor 114A ... 114N des Fahrzeugs 110 erfasst werden. Die Sensordaten können vom Fahrzeug 110 an das mobile Endgerät 140 drahtgebunden und/oder drahtlos übertragen werden, um von der Recheneinheit verarbeitet zu werden.

Darüber hinaus oder alternativ dazu kann die Recheneinheit 112 im Fahrzeug 110 integriert sein. In diesem Beispiel können die technischen Fahrparameter der Sensoren 114A ... 114N (im Folgenden auch Sensordaten genannt) und/oder die Videosequenzen der zumindest einen Videokamera 112 vom mobilen Endgerät 140 drahtgebunden oder drahtlos an die Recheneinheit 112 des Fahrzeugs 110 übertragen werden.

Darüber hinaus oder alternativ dazu kann ein Backend-Server 130 eine Recheneinheit 132 umfassen. In diesem Fall können die technischen Fahrparameter der Sensoren 114A ... 114N und die Videosequenzen vom Fahrzeug 110 und/oder vom mobilen Endgerät 140 an den Backend-Server 130 übermittelt werden. In diesem Beispiel kann das Fahrzeug 110 ein Kommunikationsmodul umfassen.

Die Recheneinheit 112, 132 ist eingerichtet, jede der Videosequenzen mit Bezug auf die erfassten technischen Fahrparameter zu verarbeiten.

Das Verarbeiten jeder Videosequenz mit Bezug auf die erfassten technischen Fahrparameter umfasst das Erweitern der Metadaten der Videosequenz über die Zeitachse um zumindest einen von dem zumindest einen Sensor 114 A ... 114N erfassten zumindest einen technischen Fahrparameter.

Jede Videosequenz umfasst eine Vielzahl von Metadaten. Die automatische Erfassung und Hinterlegung von Metadaten zu digitalen Foto- und Videodateien ist bekannt. Metadaten umfassen beispielsweise ein Aufzeichnungsdatum des jeweiligen Bildes entlang eines Zeitstrahls einer Videodatei. Darüber hinaus können Metadaten Informationen über eine Orientierung der Kamera, einer Auflösung, einer GPS-Position, sowie der verwendeten Kameraeinstellungen, etc. umfassen.

Das Verarbeiten jeder Videosequenz mit Bezug auf die erfassten technischen Fahrparameter kann das Erweitern der Metadaten über die Zeitachse um zumindest einen technischen Fahrparameter, der von dem zumindest einen Sensor 114 A ... 114N erfasst wurde, umfassen. Der Begriff "Über die Zeitachse" bedeutet insbesondere, dass die Metadaten jeweiligen Bilder einer Videosequenz zeitsynchron durch die jeweiligen technischen Fahrparameter erweitert werden.

Vorteilhafter Weise werden dadurch technische Fahrparameter mit jeweils automatisch aufgenommen Videosequenzen in Bezug gebracht.

Erfindungsgemäß umfasst das Verarbeiten jeder Videosequenz mit Bezug auf die erfassten technischen Fahrparameter das Bewerten der Videosequenz entlang der Zeitachse unter Berücksichtigung des zumindest einen technischen Fahrparameters.

Das Verarbeiten jeder Videosequenz kann das Bewerten der Videosequenz entlang der Zeitachse unter Berücksichtigung des zumindest einen technischen Fahrparameters umfassen. Der Begriff "entlang der Zeitachse" bedeutet insbesondere, dass für jede Bildaufnahme jeder Videosequenz entlang deren Zeitachse automatisch Bewertung erfolgt, die auch als Metadatum hinterlegt werden kann.

Die Bewertung der jeweiligen Videosequenz entlang der Zeitachse kann dabei gemäß vordefinierter Bewertungsskalen erfolgen.

Beispielsweise kann für jeden Sensor 114 A ... 114 N eine Bewertungsskala vordefiniert werden. Die Bewertungsskala kann geeignete Skalenwerte umfassen und Beispielsweise eine Skaleneinteilung von 0-5; 0-10; 0-100; etc. umfassen. Die Bewertungsskala ist für jeden Sensor 114 A ... 114 N geeignet auszuwählen, um die technischen Fahrparameter, die vom jeweiligen Sensor 114 A ... 114 N erfasst werden, geeignet darzustellen.

Beispielsweise kann für den Beschleunigungssensor eine Bewertungsskala von 0-10 definiert werden, wobei 0 für "keine Beschleunigung" steht und wobei 10 "für maximale Beschleunigung" steht.

Analog dazu kann eine geeignete Bewertungsskala für jeden weiteren Sensor 114 A ... 114 N definiert werden.

Für jeden technischen Parameter kann dabei automatisch eine eigene Bewertung entsprechend der zugeordneten Bewertungsskala erfolgen.

Vorteilhafter Weise kann durch die Bewertung aller Videosequenzen entlang ihrer Zeitachse entsprechend den technischen Parametern automatisch eine Auswertung der Videosequenzen anhand der zum Fahrzeitpunkt vorherrschenden technischen Parameter erfolgen.

Das Verarbeiten jeder Videosequenz mit Bezug auf die erfassten technischen Fahrparameter kann das Erstellen einer verkürzten Videosequenz einer vordefinierbaren Länge umfassen, wobei die verkürzte Videosequenz den Teil der Videosequenz mit der höchsten Bewertung entlang der Zeitachse umfasst.

Durch die vorstehend erläuterte Bewertung aller Videosequenzen entlang ihrer Zeitachse entsprechend den technischen Parametern kann jede Videosequenz automatisch verkürzt bzw. geschnitten werden, wobei die verkürzte Videosequenz den Teil der Videosequenz mit der bzw. den höchsten Bewertungen entlang der Zeitachse umfasst. Die Erstellung der verkürzten Videosequenz kann mittels eines geeigneten Algorithmus erfolgen. Der Algorithmus kann aus den Bewertungen den Teil der Videosequenz auswählen, in dem der bzw. die technischen Fahrparameter am höchsten bzw. besten bewertet wurden.

Vorteilhafter Weise wird somit jede Videosequenz automatisch anhand der fahrtechnisch höchsten bzw. besten Bewertung gekürzt und umfasst somit den für den Fahrer des Fahrzeugs 110 relevanteste Teil der Videosequenz. Die Länge der verkürzten Videosequenz kann vordefiniert sein.

Darüber hinaus ist die Recheneinheit 112, 132 eingerichtet, jede der verarbeiteten Videosequenzen anhand vordefinierbarer Kriterien zu markieren. Das Markieren der verarbeiteten Videosequenzen umfasst dabei eine Gesamtbewertung der verarbeiteten Videosequenz anhand vordefinierbarer bzw. vordefinierter Kriterien. Beispielsweise kann eine Gesamtbewertung der Bewertungen aller verarbeiteten Videosequenzen entlang der Zeitachse unter Verwendung eines geeigneten Algorithmus erfolgen (z.B. je höher die maximale Beschleunigung in der verarbeiteten Videosequenz, umso höher die Gesamtbewertung und/oder je höher die Bremskraft, umso höher die Gesamtbewertung, etc.). Die Kriterien können - je nach gewünschtem Ergebnis - individuell definiert werden.

Vorteilhafter Weise ist dadurch eine automatische Kategorisierung jeder Videosequenz bzw. verkürzten Videosequenz entlang ihrer technischen Bedeutung mit Bezug auf die technischen Fahrparameter (z.B. maximale Beschleunigung, hoher Lastwechsel, Vollbremsung, etc. bzw. einer geeigneten Kategorisierung dieser) möglich.

Darüber hinaus oder alternativ dazu kann das Markieren der Videosequenzen die automatische Zuweisung eines Kontexts zu der Videosequenz bzw. verkürzten Videosequenz umfassen.

Beispielsweise kann für vordefinierte technische Fahrparameter eine Zuweisung eines Kontexts zur jeweiligen Videosequenz umfassen:

| **Technische Fahrparameter** | **Kontext** |
|---|---|
| leichte Beschleunigung und/oder keine Querbeschleunigung und/oder kein Bremsdruck , etc. | 1 (unspektakulär) |
| Mittlere Beschleunigung und/oder leichte Querbeschleunigung und/oder mittlerer Bremsdruck etc. | 2 (interessant) |
| Hohe Beschleunigung und/oder hoher Lenkeinschlagwinkel und/oder hoher Bremsdruck und/oder hohe Querbeschleunigung | 3 (spektakulär) |

Vorteilhafter Weise kann durch die Zuweisung des Kontexts eine automatische Selektion der verarbeiteten Videosequenzen für die folgende Generierung eines Gesamtvideos des Fahrzeugs erfolgen.

Die Recheneinheit 112, 132 ist eingerichtet, automatisch ein Video umfassend eine vordefinierbare Anzahl geeigneter markierter Videosequenzen zu erstellen.

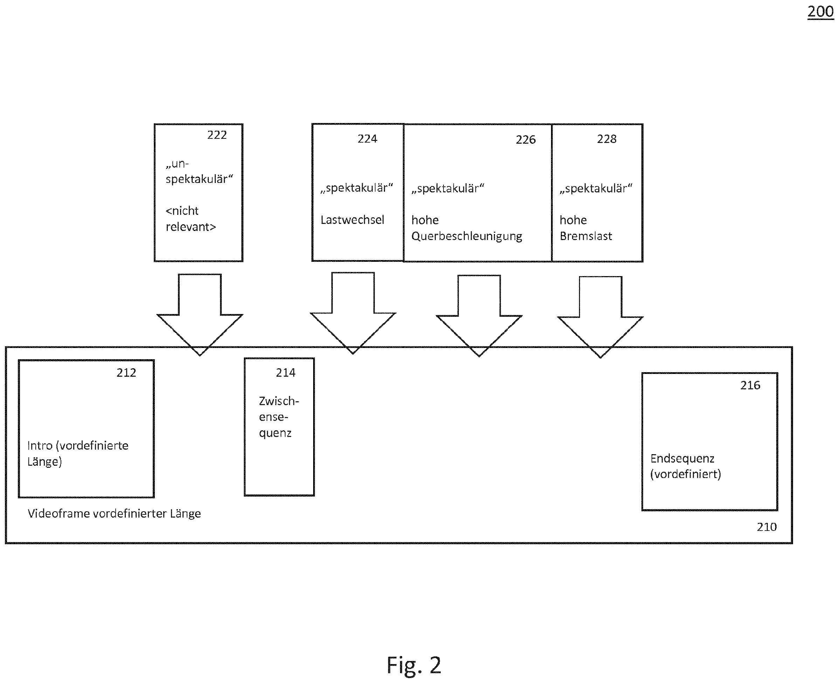

Vorteilhafter Weise kann somit automatisch ein Video einer Fahrt eines Fahrzeugs erstellt werden, das Videosequenzen mit Bezug auf technische Fahrparameter sowie geeigneter Markierung enthält. Die automatische Generierung eines Videos einer Fahrt wird in einem Beispiel mit Bezug auf Figur 2 näher erläutert.

**Figur 2** zeigt schematisch ein beispielhaftes, automatisch erstelltes Video 200 einer Fahrt. Das Video 200 setzt sich aus verschiedenen Videosequenzen 211, 222, 214, 224, 226, 228, 216 zusammen, die in einen Videorahmen bzw. Videoframe 210 eingefügt sind. Das Video 200 kann auf dem System 110 wie mit Bezug auf Figur 1 beschrieben, erstellt werden. Das System 110 kann dazu ein Verfahren 300 wie mit Bezug auf Figur 3 beschrieben ausführen.

Zunächst kann ein Fahrer im Fahrzeug 110 identifiziert werden. Dies kann auf aus dem Stand der Technik bekannte Weise wie beispielsweise über biometrische Merkmale (z.B. Gesichtserkennung), über Wissen (Eingabe einer Nutzer-Identifikationsnummer mit entsprechendem Passwort), über die Erkennung des Smartphones des Nutzers, über das Einlesen eines QR-Codes, der den Nutzer eindeutig identifiziert, etc. erfolgen.

Nach der erfolgten Identifizierung des Fahrers kann nach einem Motorstart die Erfassung der technischen Fahrparameter durch die Sensoren 114 A ... 114 N sowie die Generierung von Videosequenzen vordefinierbarer Länge - wie mit Bezug auf Figur 1 beschrieben - erfolgen. Beispielsweise können die Kameras derart gesteuert werden, dass Videosequenzen von 1 Minute (Min), 2 Min, 3 Min oder einer sonstigen geeigneten Länge generiert werden. In einem nächsten Schritt können die aufgenommenen Videosequenzen entsprechend verarbeitet werden, indem die Metadaten jeder Videosequenz - wie mit Bezug auf Figur 1 beschrieben - durch die technischen Fahrparameter der Sensoren 114 A ... 114 N zeitsynchron erweitert werden.

In einem nächsten Schritt können die um die technischen Fahrparameter erweiterten Videosequenzen zu Videosequenzen einer vordefinierten Länge wie mit Bezug auf Figur 1 beschrieben verkürzt bzw. geschnitten werden.

In einem nächsten Schritt können die verkürzten Videosequenzen wie mit Bezug auf Figur 1 beschrieben markiert werden.

In diesem Beispiel wird ein Videoframe bzw. Videorahmen 210 bereitgestellt, der drei vordefinierte Videosequenzen 212, 214 und 216 umfasst. Die Videosequenz 212 ist eine Einleitungs- bzw. Intro-Sequenz, die für alle erstellten Videos gleich ist und beispielsweise eine bestimmte Rennstrecke vorstellt. Die Videosequenz 214 ist eine Zwischensequenz, die beispielsweise eine bestimmte Gefahrenstelle der Rennstrecke vorstellt. Die Videosequenz 216 ist eine vordefinierte Endsequenz, die beispielsweise einen Abspann und/oder Werbeinhalte umfassen kann.

Aus den wie mit Bezug auf Figur 1 beschrieben verarbeiteten Videosequenzen einer Fahrt werden in diesem Beispiel vier geeignete Videosequenzen 222, 224, 226, 228 zum Einfügen in das Videoframe 210 ausgewählt. Die Auswahl der Videosequenzen erfolgt automatisch unter Berücksichtigung deren Bewertung entlang der Zeitachse und/oder der Markierungen.

In diesem Beispiel ist Videosequenz 222 markiert als "1 (unspektakulär)", da die technischen Fahrparameter auf leichte Beschleunigung und/oder keine Querbeschleunigung und/oder geringen Bremsdruck, etc. hinweisen. Diese Videosequenz 222 zeigt den Fahrer des Fahrzeugs und kann dazu diesen, den Fahrer des Fahrzeugs als "Rennfahrer" vorzustellen.

Die Videosequenz 224 ist markiert als "spektakulär" und als "Lastwechsel". Die Videosequenz 226 ist markiert als "spektakulär" und als "hohe Querbeschleunigung". Die Videosequenz 228 ist markiert als "spektakulär" und als "hoher Bremsdruck".

In jede Videosequenz können weitere Elemente, z.B. personalisierte Daten, eingeblendet werden. Z.B. kann in die Sequenz 222 der Name des identifizierten Fahrers eingeblendet werden.

Vor dem Einfügen Videosequenzen 222, 224, 226, 228 in den Videoframe 210 können die Videosequenzen 224, 226, 228 nochmals evaluiert werden. Je nach vordefinierten Kriterien (z.B. höchste Bewertung entlang der Zeitachse) können die Videosequenzen nochmals verkürzt bzw. geschnitten werden. In diesem Beispiel werden die Videosequenzen 222, 224 und 228 nochmals - analog wie mit Bezug auf Figur 1 beschrieben - gekürzt, wohingegen Videosequenz 226 ohne weitere Bearbeitung eingefügt wird.

Vorteilhafter Weise wird somit automatisch ein personalisiertes Gesamtvideo 200 einer Fahrt erstellt, welches eine Vorstellung des Fahrers des Fahrzeugs sowie eine Zusammenfassung der spektakulärsten Fahr-Abschnitte der Fahrt enthält.

Das Video 200 wird von der Recheneinheit 112, 132 im Fahrzeug bzw. mobilen Endgerät oder am Backend-Server 130 erstellt.

Das Video 200 kann über den Backend-Server 130 (ggf. nach vorheriger Übermittlung an den Backend-Server 130) für den Nutzer auf aus dem Stand der Technik bekannte Weise für den Download und/oder zum Videostreamen bereitgestellt werden. Darüber hinaus oder alternativ dazu kann das Video 200 automatisch an das mobile Endgerät 140 des identifizierten Fahrers übermittelt werden.

Die Videosequenzen 222, 224, 226, 228 die geeignet markierten Videosequenzen, die automatisch in das Video 200 integriert werden.

**Figur 3** zeigt ein Flussdiagramm, das ein beispielhaftes Verfahren 300 zur automatischen Erstellung eines Videos 210 einer Fahrt veranschaulicht. Das Verfahren 300 kann auf einem System 100 wie mit Bezug auf Figur 1 beschrieben ausgeführt werden. Die Verfahrensschritte des Verfahrens können wie mit Bezug auf Figur 1 beschrieben realisiert werden.

Das Verfahren 300 umfasst ein
kontinuierliches Erfassen 310, durch zumindest einen Sensor 116 A ... 116 N, technischer Fahrparameter eines Fahrzeugs 110;
kontinuierliches Aufnehmen 320, durch zumindest eine Videokamera 114, von Videosequenzen einer vordefinierbaren Länge;
Verarbeiten 330, durch eine Recheneinheit 112, 132, jeder der aufgenommen Videosequenzen mit Bezug auf die erfassten technischen Fahrparameter;
Markieren 340, durch die Recheneinheit 112, 132, jeder der verarbeiteten Videosequenzen anhand vordefinierbarer Kriterien; und
automatisches Erstellen 350, durch die Recheneinheit 112, 132, eines Videos umfassend eine vordefinierbare Anzahl geeigneter markierter Videosequenzen.

Der zumindest eine Sensor 116'4 A ... 114 N kann umfassen:
- einen Beschleunigungssensor; und/oder
- einen Gyrosensor; und/oder
- ein oder mehrere Sensoren einer Fahrdynamikregelung.

Das Verarbeiten jeder Videosequenz mit Bezug auf die erfassten technischen Fahrparameter umfasst das Erweitern der Metadaten der Videosequenz über die Zeitachse um zumindest einen von dem zumindest einen Sensor erfassten zumindest einen technischen Fahrparameter.

Das Verarbeiten jeder Videosequenz umfasst das Bewerten der Videosequenz entlang der Zeitachse unter Berücksichtigung des zumindest einen technischen Fahrparameter des Videos.

Das Verarbeiten jeder Videosequenz kann das Erstellen einer verkürzten Videosequenz einer vordefinierbaren Länge umfassen, wobei die verkürzte Videosequenz den Teil der Videosequenz mit der höchsten Bewertung entlang der Zeitachse umfasst.

Das Markieren der verarbeiteten Videosequenzen umfasst:
eine Gesamtbewertung der verarbeiteten Videosequenz gemäß vordefinierbarer Kriterien;

## Patentansprüche

1. System (100) zur automatischen Erstellung eines Videos (210) einer Fahrt, umfassend:
zumindest eine Recheneinheit (112, 132);
ein Fahrzeug (110), wobei das Fahrzeug (110) umfasst:
- zumindest einen Sensor (116 A ... 116 N), der eingerichtet ist, kontinuierlich technische Fahrparameter des Fahrzeugs (110) zu erfassen;
zumindest eine Videokamera (114), die eingerichtet ist, kontinuierlich Videosequenzen einer vordefinierbaren Länge aufzunehmen;
wobei die Recheneinheit (112, 132) eingerichtet ist:
- jede der Videosequenzen mit Bezug auf die erfassten technischen Fahrparameter zu verarbeiten, wobei das Verarbeiten jeder Videosequenz mit Bezug auf die erfassten technischen Fahrparameter ein Erweitern der Metadaten der Videosequenz über die Zeitachse um zumindest einen von dem zumindest einen Sensor erfassten zumindest einen technischen Fahrparameter umfasst, und wobei das Verarbeiten jeder Videosequenz ein Bewerten der Videosequenz entlang der Zeitachse unter Berücksichtigung des zumindest einen technischen Fahrparameters umfasst.;
- jede der verarbeiteten Videosequenzen anhand vordefinierbarer Kriterien zu markieren, wobei das Markieren der verarbeiteten Videosequenz jeweils ein Ermitteln einer Gesamtbewertung basierend auf den Bewertungen der entsprechenden Videosequenz entlang der Zeitachse aufweist; und
- automatisch ein Video (210) umfassend eine vordefinierbare Anzahl geeigneter markierter Videosequenzen zu erstellen.

2. System (100) gemäß Anspruch 1, wobei der zumindest eine Sensor (116 A ... 116 N) umfasst:
- einen Beschleunigungssensor; und/oder
- einen Gyrosensor; und/oder
- ein oder mehrere Sensoren einer Fahrdynamikregelung.

3. System (100) gemäß Anspruch 1 oder 2, wobei das Verarbeiten jeder Videosequenz ein Erstellen einer verkürzten Videosequenz einer vordefinierbaren Länge umfasst, wobei die verkürzte Videosequenz den Teil der Videosequenz mit der höchsten Bewertung entlang der Zeitachse umfasst.

4. Verfahren (300) zur automatischen Erstellung eines Videos (210) einer Fahrt, umfassend:
kontinuierliches Erfassen (310), durch zumindest einen Sensor (116 A ... 116 N), technischer Fahrparameter eines Fahrzeugs (110);
kontinuierliches Aufnehmen (320), durch zumindest eine Videokamera (114), von Videosequenzen einer vordefinierbaren Länge;
Verarbeiten (330), durch eine Recheneinheit (112, 132), jeder der aufgenommen Videosequenzen mit Bezug auf die erfassten technischen Fahrparameter, wobei das Verarbeiten jeder Videosequenz mit Bezug auf die erfassten technischen Fahrparameter ein Erweitern der Metadaten der Videosequenz über die Zeitachse um zumindest einen von dem zumindest einen Sensor erfassten zumindest einen technischen Fahrparameter umfasst, und wobei das Verarbeiten jeder Videosequenz ein Bewerten der Videosequenz entlang der Zeitachse unter Berücksichtigung des zumindest einen technischen Fahrparameters umfasst;.
Markieren (340), durch die Recheneinheit (112, 132), jeder der verarbeiteten Videosequenzen anhand vordefinierbarer Kriterien, wobei das Markieren der verarbeiteten Videosequenz jeweils ein Ermitteln einer Gesamtbewertung basierend auf den Bewertungen der entsprechenden Videosequenz entlang der Zeitachse aufweist; und
automatisches Erstellen (350), durch die Recheneinheit (112, 132), eines Videos umfassend eine vordefinierbare Anzahl geeigneter markierter Videosequenzen.

5. Verfahren (300) gemäß Anspruch 4, wobei der zumindest eine Sensor (116 A ... 116 N) umfasst:
- einen Beschleunigungssensor; und/oder
- einen Gyrosensor; und/oder
- ein oder mehrere Sensoren einer Fahrdynamikregelung.

6. Verfahren (300) gemäß Anspruch 4 oder 5, wobei das Verarbeiten jeder Videosequenz ein Erstellen einer verkürzten Videosequenz einer vordefinierbaren Länge umfasst, wobei die verkürzte Videosequenz den Teil der Videosequenz mit der höchsten Bewertung entlang der Zeitachse umfasst.

## Claims

1. System (100) for automatically creating a video (210) of a journey, comprising:
at least one computing unit (112, 132);
a vehicle (110), wherein the vehicle (110) comprises:
• at least one sensor (116 A ... 116 N) configured to continuously capture technical driving parameters of the vehicle (110);
at least one video camera (114) configured to continuously record video sequences of a predefinable length;
wherein the computing unit (112, 132) is configured to:
∘ process each of the video sequences with reference to the captured technical driving parameters, wherein processing each video sequence with reference to the captured technical driving parameters comprises extending the metadata of the video sequence along the time axis by at least one technical driving parameter captured by the at least one sensor, and wherein processing each video sequence comprises evaluating the video sequence along the time axis taking into account the at least one technical driving parameter;
∘ mark each of the processed video sequences based on predefinable criteria, wherein marking the processed video sequence comprises determining an overall rating based on the ratings of the corresponding video sequence along the time axis; and
∘ automatically create a video (210) comprising a predefinable number of suitable marked video sequences.

2. System (100) according to claim 1, wherein the at least one sensor (116 A ... 116 N) comprises:
∘ an acceleration sensor; and/or
∘ a gyro sensor; and/or
∘ one or more sensors of a vehicle dynamics control system.

3. System (100) according to claim 1 or 2, wherein processing each video sequence comprises creating a shortened video sequence of a predefinable length, wherein the shortened video sequence comprises the portion of the video sequence with the highest rating along the time axis.

4. Method (300) for automatically creating a video (210) of a journey, comprising:
continuously capturing (310), by at least one sensor (116 A ... 116 N), technical driving parameters of a vehicle (110);
continuously recording (320), by at least one video camera (114), video sequences of a predefinable length;
processing (330), by a computing unit (112, 132), each of the recorded video sequences with reference to the captured technical driving parameters,
wherein processing each video sequence with reference to the captured technical driving parameters comprises extending the metadata of the video sequence along the time axis by at least one technical driving parameter captured by the at least one sensor, and wherein processing each video sequence comprises evaluating the video sequence along the time axis taking into account the at least one technical driving parameter;
marking (340), by the computing unit (112, 132), each of the processed video sequences based on predefinable criteria, wherein marking the processed video sequence comprises determining an overall rating based on the ratings of the corresponding video sequence along the time axis; and
automatically creating (350), by the computing unit (112, 132), a video comprising a predefinable number of suitable marked video sequences.

5. Method (300) according to claim 4, wherein the at least one sensor (116 A ... 116 N) comprises:
∘ an acceleration sensor; and/or
∘ a gyro sensor; and/or
∘ one or more sensors of a vehicle dynamics control system.

6. Method (300) according to claim 4 or 5, wherein processing each video sequence comprises creating a shortened video sequence of a predefinable length, wherein the shortened video sequence comprises the portion of the video sequence with the highest rating along the time axis.

## Revendications

1. Système (100) pour créer automatiquement une vidéo (210) d'un trajet, comprenant :
au moins une unité de calcul (112, 132) ;
un véhicule (110), le véhicule (110) comprenant :
▪ au moins un capteur (116 A ... 116 N) configuré pour saisir en continu des paramètres de conduite techniques du véhicule (110) ;
au moins une caméra vidéo (114) configurée pour enregistrer en continu des séquences vidéo d'une longueur prédéfinissable ;
dans lequel l'unité de calcul (112, 132) est configurée pour :
∘ traiter chacune des séquences vidéo en référence aux paramètres de conduite techniques saisis, le traitement de chaque séquence vidéo en référence aux paramètres de conduite techniques saisis comprenant l'extension des métadonnées de la séquence vidéo le long de l'axe temporel par au moins un paramètre de conduite technique saisi par le au moins un capteur, et le traitement de chaque séquence vidéo comprenant l'évaluation de la séquence vidéo le long de l'axe temporel en tenant compte du au moins un paramètre de conduite technique ;
∘ marquer chacune des séquences vidéo traitées sur la base de critères prédéfinissables, le marquage de la séquence vidéo traitée comprenant respectivement la détermination d'une évaluation globale basée sur les évaluations de la séquence vidéo correspondante le long de l'axe temporel ; et
∘ créer automatiquement une vidéo (210) comprenant un nombre prédéfinissable de séquences vidéo marquées appropriées.

2. Système (100) selon la revendication 1, dans lequel le au moins un capteur (116 A ... 116 N) comprend :
∘ un capteur d'accélération ; et/ou
∘ un capteur gyroscopique ; et/ou
∘ un ou plusieurs capteurs d'un système de contrôle de la dynamique du véhicule.

3. Système (100) selon la revendication 1 ou 2, dans lequel le traitement de chaque séquence vidéo comprend la création d'une séquence vidéo raccourcie d'une longueur prédéfinissable, la séquence vidéo raccourcie comprenant la partie de la séquence vidéo ayant l'évaluation la plus élevée le long de l'axe temporel.

4. Procédé (300) pour créer automatiquement une vidéo (210) d'un trajet, comprenant :
la saisie en continu (310), par au moins un capteur (116 A ... 116 N), de paramètres de conduite techniques d'un véhicule (110) ;
l'enregistrement en continu (320), par au moins une caméra vidéo (114), de séquences vidéo d'une longueur prédéfinissable ;
le traitement (330), par une unité de calcul (112, 132), de chacune des séquences vidéo enregistrées en référence aux paramètres de conduite techniques saisis, le traitement de chaque séquence vidéo en référence aux paramètres de conduite techniques saisis comprenant l'extension des métadonnées de la séquence vidéo le long de l'axe temporel par au moins un paramètre de conduite technique saisi par le au moins un capteur, et le traitement de chaque séquence vidéo comprenant l'évaluation de la séquence vidéo le long de l'axe temporel en tenant compte du au moins un paramètre de conduite technique ;
le marquage (340), par l'unité de calcul (112, 132), de chacune des séquences vidéo traitées sur la base de critères prédéfinissables, le marquage de la séquence vidéo traitée comprenant respectivement la détermination d'une évaluation globale basée sur les évaluations de la séquence vidéo correspondante le long de l'axe temporel ; et
la création automatique (350), par l'unité de calcul (112, 132), d'une vidéo comprenant un nombre prédéfinissable de séquences vidéo marquées appropriées.

5. Procédé (300) selon la revendication 4, dans lequel le au moins un capteur (116 A ... 116 N) comprend :
∘ un capteur d'accélération ; et/ou
∘ un capteur gyroscopique ; et/ou
∘ un ou plusieurs capteurs d'un système de contrôle de la dynamique du véhicule.

6. Procédé (300) selon la revendication 4 ou 5, dans lequel le traitement de chaque séquence vidéo comprend la création d'une séquence vidéo raccourcie d'une longueur prédéfinissable, la séquence vidéo raccourcie comprenant la partie de la séquence vidéo ayant l'évaluation la plus élevée le long de l'axe temporel.
